# EUROPEAN PATENT APPLICATION

(11) **EP 4 576 875 A1**
(43) Date of publication of application: **25.06.2025**
(21) Application number: 24216330.1
(22) Date of filing: 29.11.2024
(51) Int. Cl.: H04W 36/00, H04W 72/51

(54) **HANDOVER ENABLING EARLY SIMULTANEOUS RECEPTION**

(30) Priority: 20.12.2023 IN 202341087427
(71) Applicant: Nokia Technologies Oy, 02610 Espoo (FI)
(72) Inventor: SONI, Brajesh, Gaurela-Pendra-Marwahi (IN); SHETTY, Smita, Bengaluru (IN); DIMNIK, Riikka Karoliina, Kirkkonummi (FI); K, Sreekanth, Calicut (IN); CAUDURO DIAS DE PAIVA, Rafael, Aalborg (DK)
(74) Representative: Nokia EPO representatives

(57) **Abstract**

Systems, methods, apparatuses, and computer program products for handover enabling early simultaneous reception. A method may include transmitting a handover request including user equipment capability information to a target cell during a handover preparation phase of a user equipment to the target cell. The user equipment capability information may include at least one of user equipment multi-transmission or user equipment multi-reception capabilities, single-downlink control information capabilities or multi-downlink control information capabilities, group based beam reporting capability or beam sweeping factors. The method may also include receiving, from the target cell during the handover preparation phase to the target cell, an acknowledgment including a user equipment specific channel measurement resources. The method may further include transmitting the user equipment specific channel measurement resources to the user equipment.

## Description

### RELATED APPLICATION:

This application claims priority to IN provisional Application No. 202341087427 filed December 20, 2023, which is incorporated herein by reference in its entirety.

### FIELD:

Some example embodiments may generally relate to mobile or wireless telecommunication systems, such as Long Term Evolution (LTE) or fifth generation (5G) new radio (NR) access technology, or 5G beyond, or sixth generation (6G) access technology, or other communications systems. For example, certain example embodiments may relate to apparatuses, systems, and/or methods for handover enabling early simultaneous reception.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology and/or sixth generation (6G) radio access technology. Fifth generation (5G) and sixth generation (6G) wireless systems refer to the next generation (NG) of radio systems and network architecture. 5G and 6G network technology is mostly based on new radio (NR) technology, but the 5G/6G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Some example embodiments may be directed to a method. The method may include transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include receiving, from the target cell during the handover preparation phase to the target cell, an acknowledgment including a user equipment specific channel measurement resources. The method may further include transmitting the user equipment specific channel measurement resources to the user equipment.

Other example embodiments may be directed to an apparatus. The apparatus may include at least one processor and at least one memory including computer program code. The at least one memory and the computer program code may be configured to, with the at least one processor, cause the apparatus at least to transmit a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also be caused to receive, from the target cell during the handover preparation phase to the target cell, an acknowledgment including a user equipment specific channel measurement resources. The apparatus may further be caused to transmit the user equipment specific channel measurement resources to the user equipment.

Other example embodiments may be directed to an apparatus. The apparatus may include means for transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include means for receiving, from the target cell during the handover preparation phase to the target cell, an acknowledgment including a user equipment specific channel measurement resources. The apparatus may further include means for transmitting the user equipment specific channel measurement resources to the user equipment.

In accordance with other example embodiments, a non-transitory computer readable medium may be encoded with instructions that may, when executed in hardware, perform a method. The method may include transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include receiving, from the target cell during the handover preparation phase to the target cell, an acknowledgment including a user equipment specific channel measurement resources. The method may further include transmitting the user equipment specific channel measurement resources to the user equipment.

Other example embodiments may be directed to a computer program product that performs a method. The method may include transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include receiving, from the target cell during the handover preparation phase to the target cell, an acknowledgment including a user equipment specific channel measurement resources. The method may further include transmitting the user equipment specific channel measurement resources to the user equipment.

Other example embodiments may be directed to an apparatus that may include circuitry configured to transmit a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include circuitry configured to receive, from the target cell during the handover preparation phase to the target cell, an acknowledgment including a user equipment specific channel measurement resources. The apparatus may further include circuitry configured to transmit the user equipment specific channel measurement resources to the user equipment.

Further example embodiments may be directed to a method. The method may include receiving a handover request including user equipment capability information from a source cell during a handover preparation phase of a user equipment to a target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include transmitting, to the source cell during the handover preparation phase to the target cell, an acknowledgment including user equipment specific channel measurement resources. The method may further include receiving a report from the user equipment based on the user equipment specific channel measurement resource transmitted after the handover preparation phase to the target cell.

Other example embodiments may be directed to an apparatus. The apparatus may include at least one processor and at least one memory including computer program code. The at least one memory and the computer program code may be configured to, with the at least one processor, cause the apparatus at least to receive a handover request including user equipment capability information from a source cell during a handover preparation phase of a user equipment to the apparatus. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also be caused to transmit, to the source cell during the handover preparation phase to the apparatus, an acknowledgment including user equipment specific channel measurement resources. The apparatus may further be caused to receive a report from the user equipment based on the user equipment specific channel measurement resource transmitted after the handover preparation phase to the apparatus.

Other example embodiments may be directed to an apparatus. The apparatus may include means for receiving a handover request including user equipment capability information from a source cell during a handover preparation phase of a user equipment to the apparatus. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include means for transmitting, to the source cell during the handover preparation phase to the apparatus, an acknowledgment including user equipment specific channel measurement resources. The apparatus may further include means for receiving a report from the user equipment based on the user equipment specific channel measurement resource transmitted after the handover preparation phase to the apparatus.

In accordance with other example embodiments, a non-transitory computer readable medium may be encoded with instructions that may, when executed in hardware, perform a method. The method may include receiving a handover request including user equipment capability information from a source cell during a handover preparation phase of a user equipment to a target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include transmitting, to the source cell during the handover preparation phase to the target cell, an acknowledgment including user equipment specific channel measurement resources. The method may further include receiving a report from the user equipment based on the user equipment specific channel measurement resource transmitted after the handover preparation phase to the target cell.

Other example embodiments may be directed to a computer program product that performs a method. The method may include receiving a handover request including user equipment capability information from a source cell during a handover preparation phase of a user equipment to a target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include transmitting, to the source cell during the handover preparation phase to the target cell, an acknowledgment including user equipment specific channel measurement resources. The method may further include receiving a report from the user equipment based on the user equipment specific channel measurement resource transmitted after the handover preparation phase to the target cell.

Other example embodiments may be directed to an apparatus that may include circuitry configured to receive a handover request including user equipment capability information from a source cell during a handover preparation phase of a user equipment to the apparatus. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include circuitry configured to transmit, to the source cell during the handover preparation phase to the apparatus, an acknowledgment including user equipment specific channel measurement resources. The apparatus may further include circuitry configured to receive a report from the user equipment based on the user equipment specific channel measurement resource transmitted after the handover preparation phase to the apparatus.

Further example embodiments may be directed to a method. The method may include receiving specific channel measurement resources of a target cell, from a source cell during a handover preparation phase. According to certain example embodiments, each specific channel measurement resource belongs to different transceiver reception points. The method may also include establishing a communication connection with a target cell based on the specific channel measurement resources. The method may further include transmitting a report to the target cell based on the specific channel measurement resource after the handover preparation phase.

Other example embodiments may be directed to an apparatus. The apparatus may include at least one processor and at least one memory including computer program code. The at least one memory and the computer program code may be configured to, with the at least one processor, cause the apparatus at least to receive specific channel measurement resources of a target cell, from a source cell during a handover preparation phase. According to certain example embodiments, each specific channel measurement resource belongs to different transceiver reception points. The apparatus may also be caused to establish a communication connection with a target cell based on the specific channel measurement resources. The apparatus may further be caused to transmit a report to the target cell based on the specific channel measurement resource after the handover preparation phase.

Other example embodiments may be directed to an apparatus. The apparatus may include means for receiving specific channel measurement resources of a target cell, from a source cell during a handover preparation phase. According to certain example embodiments, each specific channel measurement resource belongs to different transceiver reception points. The apparatus may also include means for establishing a communication connection with a target cell based on the specific channel measurement resources. The apparatus may further include means for transmitting a report to the target cell based on the specific channel measurement resource after the handover preparation phase.

In accordance with other example embodiments, a non-transitory computer readable medium may be encoded with instructions that may, when executed in hardware, perform a method. The method may include receiving specific channel measurement resources of a target cell, from a source cell during a handover preparation phase. According to certain example embodiments, each specific channel measurement resource belongs to different transceiver reception points. The method may also include establishing a communication connection with a target cell based on the specific channel measurement resources. The method may further include transmitting a report to the target cell based on the specific channel measurement resource after the handover preparation phase.

Other example embodiments may be directed to a computer program product that performs a method. The method may include receiving specific channel measurement resources of a target cell, from a source cell during a handover preparation phase. According to certain example embodiments, each specific channel measurement resource belongs to different transceiver reception points. The method may also include establishing a communication connection with a target cell based on the specific channel measurement resources. The method may further include transmitting a report to the target cell based on the specific channel measurement resource after the handover preparation phase.

Other example embodiments may be directed to an apparatus that may include circuitry configured to receive specific channel measurement resources of a target cell, from a source cell during a handover preparation phase. According to certain example embodiments, each specific channel measurement resource belongs to different transceiver reception points. The apparatus may also include circuitry configured to establish a communication connection with a target cell based on the specific channel measurement resources. The apparatus may further include circuitry configured to transmit a report to the target cell based on the specific channel measurement resource after the handover preparation phase.

### BRIEF DESCRIPTION OF THE DRAWINGS:

For proper understanding of example embodiments, reference should be made to the accompanying drawings, wherein:
FIG. 1 illustrates an example multi-Rx reception through a single downlink control information (s-DCI) mode.
FIG. 2 illustrates an example multi-Rx reception through a multi-downlink control information (m-DCI) mode.
FIG. 3 illustrates an example of a signal diagram.
FIG. 4 illustrates an example of a signal diagram for a multi-transmission/multi-reception (m-Tx/Rx) simultaneous operation.
FIG. 5 illustrates an example of a signal diagram enabling simultaneous reception, according to certain example embodiments.
FIG. 6 illustrates an example flow diagram of a method, according to certain example embodiments.
FIG. 7 illustrates an example flow diagram of another method, according to certain example embodiments.
Fig. 8 illustrates an example flow diagram of a further method, according to certain example embodiments.
FIG. 9 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for handover enabling early simultaneous reception.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably.

Additionally, throughout this specification, an anchor transceiver point (TRP) may correspond to a TRP with uplink (UL) and, in a single downlink control information (s-DCI) scenario, the one with a physical downlink control channel (PDCCH). Furthermore, a mobility procedure with dual connectivity may be described as a handover request message containing ongoing secondary cell group (SCG) configuration. Under the mobility procedure with dual connectivity, if the handover request message includes ongoing SCG configuration, the target cell may provide suitable SCG configurations during dual connectivity. If the handover request message includes a mobility restriction list, the target cell may provide proper SCG configuration considering mobility restriction information during a dual connectivity operation to ensure the dual connectivity during the handover procedure.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

A new radio (NR) cell may include one or more TRPs. TRPs of the same cell may have a common synchronization signal (SS)/physical broadcast channel (PBCH) block that is cell specific. In a multiple transmit/receive point (multi-TRP) operation, a serving cell may schedule a user equipment (UE) from two TRPs, providing better coverage, reliability and/or data rates for physical downlink shared channel (PDSCH), PDCCH, physical uplink shared channel (PUSCH), and physical uplink control channel (PUCCH).

Multi-TRP PDSCH transmissions may be scheduled in multiple ways. For example, multi-TRP PDSCH transmissions may be scheduled via a s-DCI or a multi-downlink control information (m-DCI) mode. For both modes, control of uplink (UL) and downlink (DL) operation(s) may be accomplished by a physical layer and a medium access control (MAC) layer, within a configuration provided by a radio resource control (RRC).

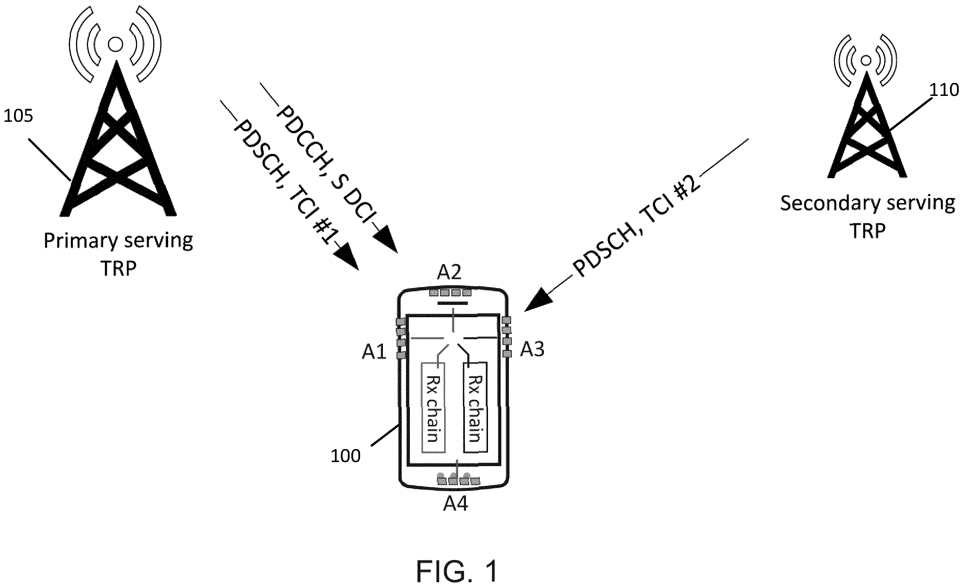

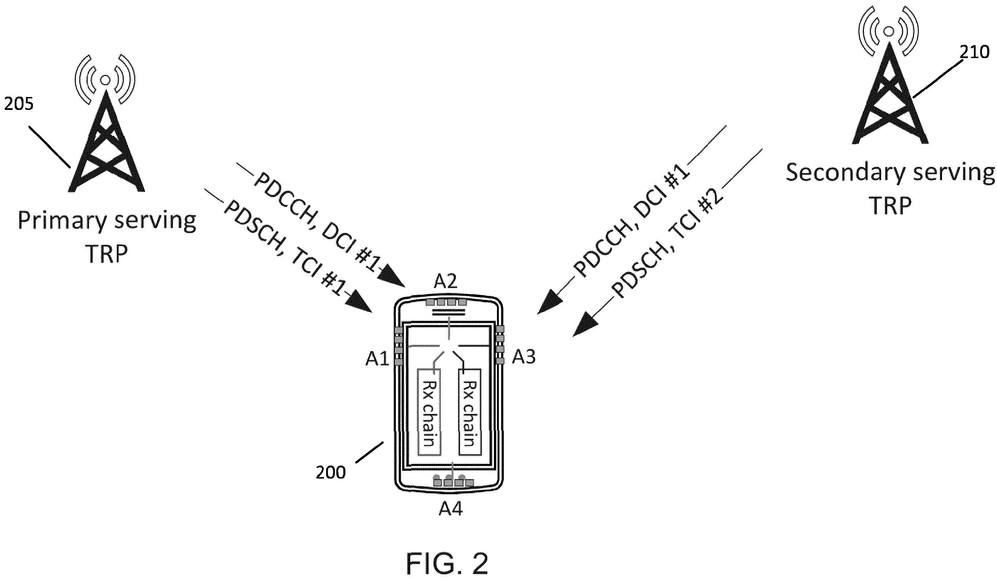

FIG. 1 illustrates an example multi-reception (multi-Rx) through s-DCI mode, and FIG. 2 illustrates an example multi-Rx reception through m-DCI mode. In an s-DCI mode, a UE 100 may be scheduled by the same DCI for both TRPs 105, 110, and in an m-DCI mode, the UE 200 may be scheduled by independent DCIs from each TRP 205, 210. Furthermore, s-DCI and m-DCI may be independent capabilities where a UE may either support any one of these or both capabilities depending on the UE's implementation.

In NR, network control mobility may apply to UEs in RRC_CONNECTED mode and may be categorized into cell level mobility and beam level mobility. Beam level mobility may include intra-cell beam level mobility and inter-cell beam level mobility, whereas cell level mobility may require explicit RRC signaling to be triggered (e.g., handover).

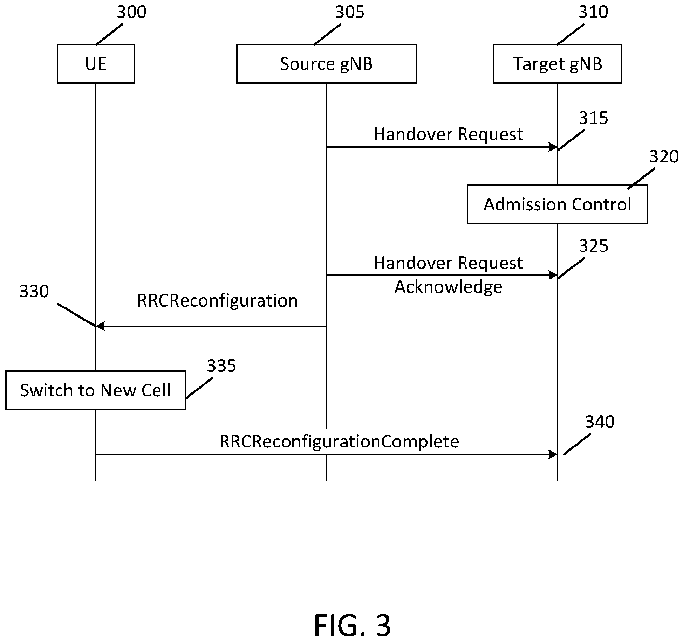

FIG. 3 illustrates an example of a signal diagram. For inter-gNB handover, the signaling procedures may include at least the elemental components shown in FIG. 3. In particular, the signal diagram of FIG. 3 may be directed to layer 3 mobility involving a UE 300, source gNB 305, and target gNB 310. At 315, the source gNB initiates handover, and issues a HANDOVER REQUEST to the target gNB 310 over an Xn interface. At 320, the target gNB 310 performs admission control, and at 325, the target gNB 310 provides the new RRC configuration to the source gNB 305 as part of a HANDOVER REQUEST ACKNOWLEDGE message. At 330, the source gNB 305 provides an RRC configuration to the UE 300 by forwarding an rrcReconfiguration message received in the HANDOVER REQUEST ACKNOWLEDGE. The rrcReconfiguration message may include at least a cell identifier (ID) and all information required to access the target cell so that the UE 300 can access the target cell without reading system information. For some cases, the information required for contention-based and contention-free random access may be included in the rrcReconfiguration message. Additionally, the access information to the target cell may include beam specific information, if any.

At 335, the UE 300 switches to the new cell (e.g., target gNB 310). At 340, the UE 300 replies, after moving the RRC connection to the target gNB 310, with an rrcReconfigurationComplete message. In the handover procedure illustrated in FIG. 3, a muti-reception (MRx) UE performing simultaneous receptions from multiple TRPs from multiple TRPs in a source cell (e.g., source gNB) may be handed over to a cell that may or may not be multiple TRPs (MTRP) capable. In legacy handover procedures, the UE may be handed over to a target cell (e.g., target gNB) with legacy single Rx reception. Based on the UE's interest and target cell capabilities (if present), the UE and network may initiate legacy multi-transmission/multi-reception (m-Tx/Rx) operation in the legacy way of capabilities exchange, configurations, channel state information (CSI) reporting, and simultaneous reception.

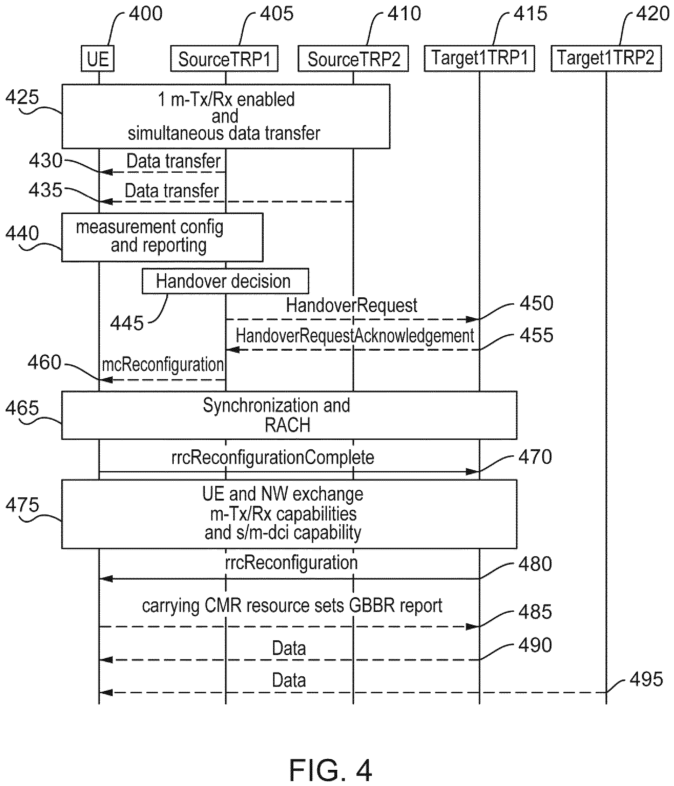

FIG. 4 illustrates an example signal of diagram for m-Tx/Rx simultaneous operation with a UE 400, source TRP1 405, source TRP2 410, target TRP1 415, and target TRP2 420. As illustrated in FIG. 3, the handover procedure may handover a MRx capable UE (performing simultaneous reception with a source cell) to a non-MTRP cell with legacy signal Rx reception. If, however, the target cell is an MTRP capable cell, MRx reception and future reception may be interrupted. In this scenario, legacy MRx operation may be enabled.

As illustrated in FIG. 4, at 425, m-Tx/Rx operation is enabled along with simultaneous data transfer between the UE 400 and source TRP1 405 and source TRP2 410. At 430, the source TRP1 405 initiates and performs data transfer to the UE 400. Similarly, at 435, the source TRP2 410 may initiate and perform data transfer to the UE 400. At 440, the UE 400 receives measurement configuration from the source TRP1 405, and perform measurement reporting. At 445, the source TRP1 405 makes a handover decision for handover of the UE 400 to a target cell. At 450, the source TRP 1 405 transmits a handover request to the target TRP 1 415 requesting handover of the UE 400. In response, at 455, the target TRP1 415 provides RRC configuration to the UE 400 via the source TRP1 405 by forwarding a rrcReconfiguration message received in a HandoverRequestAcknowledgment. At 460, the source TRP1 405 forwards the RRC configuration in an rrcReconfiguration message to the UE 400.

At 465, synchronization and RACH to the target TRP1 415 is executed. At 470, the UE 400 transmits an rrcReconfigurationComplete message to the target TRP 1 415 indicating completion of handover to the target TRP1 415. At 475, the UE 400 exchanges m-Tx/Rx capabilities and s/m-DCI capabilities with the target TRP 1 415 via the source cell (e.g., source TRP1 405 and/or source TRP2 410). At 480, the target TRP1 415 transmits an rrcReconfiguration message to the UE 400, which includes channel measurement resource (CMR) sets. At 485, the UE 400 transmits a group based beam reporting (GBBR) report to the target TRP1 415, and at 490 and 495, the target TRP1 415 and target TRP2 420 transmit data to the UE 400 based on the GBBR report.

As described herein, certain example embodiments may provide a way to enable MRx handover with simultaneous reception in a target cell. According to certain example embodiments, this may be achieved by enabling early group-based beam measurements for a m-Rx/Tx capable UE immediately after a handover procedure to minimize the time the UE spends in single-Rx operation due to the handover.

According to certain example embodiments, m-Tx/Rx capabilities may be exchanged during a handover preparation phase between a source and target cells. Additionally, in some example embodiments, UE specific CMR (e.g., CSI resource sets exchange) may be transmitted to the UE ahead of the handover from the target cell, or immediately after the handover via the target cell.

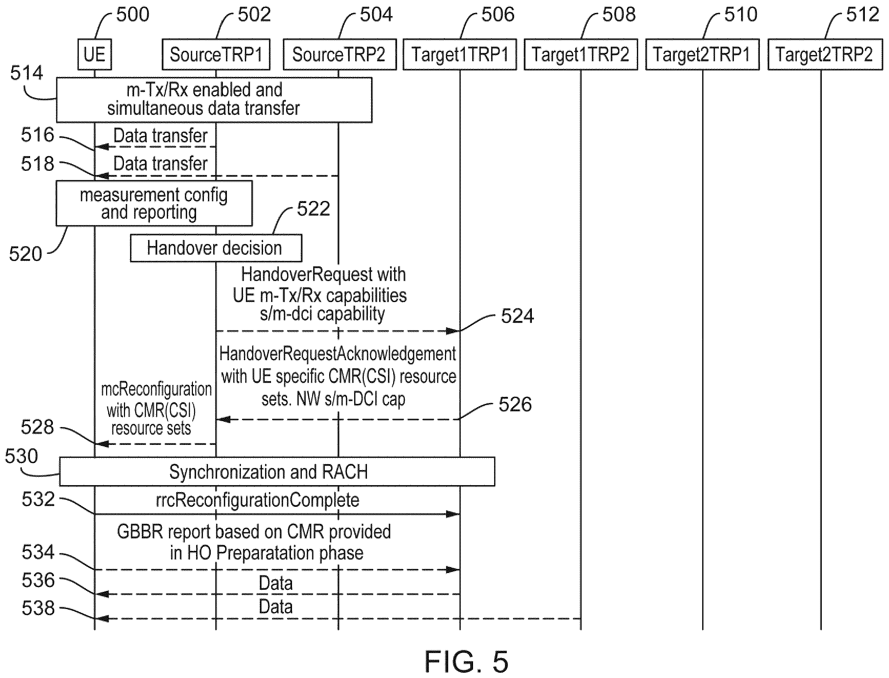

FIG. 5 illustrates an example of a signal diagram enabling simultaneous reception, according to certain example embodiments. Similar to FIG. 4, the handover procedure illustrated in FIG. 5 may be executed with a UE 500, source TRP1 502, source TRP2 504, target1 TRP1 506, target1 TRP2 508, target2 TPR1 510, and target2 TRP2 512. As illustrated in FIG. 5, operations 514 to 522 may be similar to operations 425 to 445 in FIG. 4 and, thus, the description of operations 425 to 445 may be applicable to operations 514 to 522.

At 524, the source TRP1 502 transmits a handover request to the target1 TRP1 506 requesting handover of the UE 500. In certain example embodiments, the handover request may include UE m-Tx/Rx operation capabilities such as, for example, s/m-DCI, beam sweeping factors, in IE SourceToTarget - TransparentContainer. In other example embodiments, the handover request may be transmitted to the target1 TRP1 506 in a handover request message for Xn based handover. In further example embodiments, the source TRP1 502 (e.g., source cell) may use handover required message(s) to transfer the UE's 500 m-Tx/Rx operation capabilities (e.g., s/m-DCI, beam sweeping factors, etc.) to the target cell for next generation-based (NG-based) handover.

At 526, the target1 TRP1 506 provides RRC configuration to the UE 500 via the source TRP1 502 by forwarding a rrcReconfiguration message received in a HandoverRequestAcknowledgment. In certain example embodiments, the target1 TRP 506 may provide, in the HandoverRequestAcknowledgment-targetCellToSourceCell transparent container, UE specific CMR (CSI) sets to the UE 500 where each resource set may belong to different TRPs. The source TRP1 502 may transparently pass the contents of the HandoverRequestAcknowledgment to the UE 500 via an rrcReconfiguration message. In other example embodiments, the target cell (e.g., target1 TRP1 506) may use a handover command message to provide the UE specific CMR (e.g., CSI) sets to the UE 500 via the source TRP1 502. In further example embodiments, each resource set may belong to different TRPs. In some example embodiments, the target cell may share the UE specific CMR sets belonging to different TRPs of the target cell (e.g., target TRP) to the UE 500 based on the information exchange of the m-Rx/Tx capabilities during the handover procedures as soon as the UE 500 connects to the target cell (e.g., when the UE has sent the first UL transmission (e.g., RACH preamble or RRC reconfiguration configuration complete) to the target cell).

In further example embodiments, the target cell (e.g., target1 TRP1 506) may provide s/m-DCI capabilities of the target cell to the UE 500 via the source cell (e.g., source 1 TRP1 502) using any of the messages described above. In certain example embodiments, the target cell may support s-DCI based m-Tx/Rx operation. The capabilities may be conveyed by the target cell (anchor TRP) to the UE via the source cell (anchor TRP). At 528, the source TRP1 502 forwards the RRC configuration in an rrcReconfiguration message to the UE 500 along with the CMR (e.g. CSI) sets. At 530, synchronization and RACH to the target1 TRP1 506 is executed. At 532, the UE 500 transmits an rrcReconfigurationComplete message to the target1 TRP1 506 indicating completion of handover to the target1 TRP1 506. In certain example embodiments, as soon as the UE 500 sends the RACH request to the target cell (e.g., target1 TRP1 506), the target cell may consider the RACH as an indication from the UE 500, and use this indication to enable the CMR resources. By doing so, the target cell may efficiently manage the resources provided for CMR measurement.

At 534, the UE 500 transmits a (early) GBBR report based on the provided CMR to the target1 TRP1 506 in the HO preparation phase. In other example embodiments, the cell (e.g., target1 TRP1 506) and UE 500 may commence (early) m-Tx/Rx operation. At 536 and 538, the target1 TRP1 506 and target1 TRP2 508 transmit data to the UE 500.

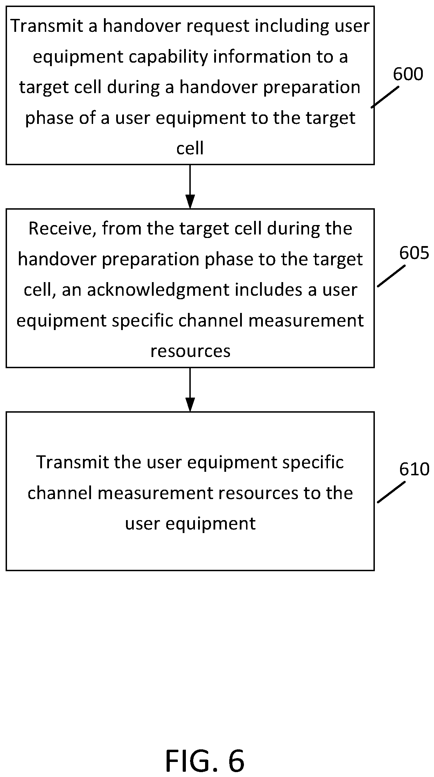

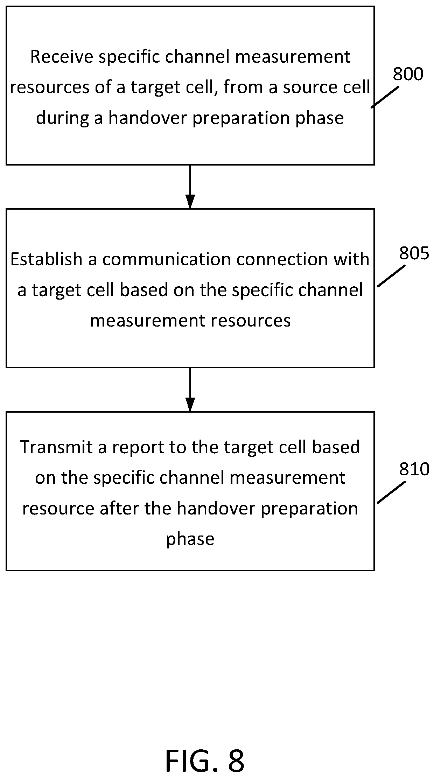

FIG. 6 illustrates an example flow diagram of a method, according to certain example embodiments. In an example embodiment, the method of FIG. 6 may be performed by a network entity, or a group of multiple network elements in a 3GPP system, such as LTE or 5G-NR. For instance, in an example embodiment, the method of FIG. 6 may be performed by a gNB, source cell, source gNB, or source TRP similar to one of apparatuses 10 or 20 illustrated in FIG. 8.

According to certain example embodiments, the method of FIG. 6 may include, at 600, transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include, at 605, receiving, from the target cell during the handover preparation phase to the target cell, an acknowledgment including a user equipment specific channel measurement resources. The method may further include, at 610, transmitting the user equipment specific channel measurement resources to the user equipment.

According to certain example embodiments, the user equipment specific channel measurement resources may include channel state information resources where each resource belongs to different transceiver reception points. According to other example embodiments, the user equipment specific channel measurement resources may be received from the target cell prior to handover of the user equipment to the target cell, or after completion of the handover to the target cell. According to some example embodiments, the acknowledgment may further include target cell single-downlink control information capabilities or target cell multi-downlink control information capabilities. According to further example embodiments, the user equipment specific channel measurement resources may be transmitted to the user equipment via a radio resource control reconfiguration.

In certain example embodiments, a plurality of channel measurement resource sets may be comprised of the user equipment specific channel measurement resources, and each channel measurement resource set may belong to different transceiver reception points of the target cell. According to other example embodiments, the user equipment specific channel measurement resources may be received in a handover request acknowledgement message or a handover command message.

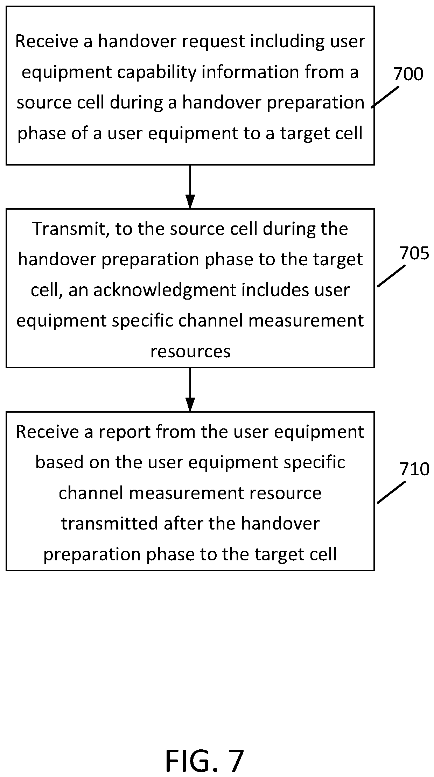

FIG. 7 illustrates an example flow diagram of another method, according to certain example embodiments. In an example embodiment, the method of FIG. 7 may be performed by a network entity, or a group of multiple network elements in a 3GPP system, such as LTE or 5G-NR. For instance, in an example embodiment, the method of FIG. 7 may be performed by a gNB, target cell, target gNB, or target TRP similar to one of apparatuses 10 or 20 illustrated in FIG 8.

According to certain example embodiments, the method of FIG. 7 may include, at 700, receiving a handover request may include user equipment capability information from a source cell during a handover preparation phase of a user equipment to a target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The method may also include, at 705, transmitting, to the source cell during the handover preparation phase to the target cell, an acknowledgment including user equipment specific channel measurement resources. The method may further include, at 710, receiving a report from the user equipment based on the user equipment specific channel measurement resource transmitted after the handover preparation phase to the target cell.

According to certain example embodiments, the method may also include receiving, from the user equipment, a random access channel request, and enabling, based on the random access channel request, the user equipment specific channel measurement resources. According to some example embodiments, the user equipment specific channel measurement resources may include channel state information resources where each resource belongs to different transceiver reception points. According to other example embodiments, the user equipment specific channel measurement resources may be transmitted to the source cell prior to handover of the user equipment to the target cell, or after completion of the handover to the target cell.

In certain example embodiments, the acknowledgment may also include target cell single-downlink control information capabilities or target cell multi-downlink control information capabilities. In some example embodiments, a plurality of channel measurement resource sets may be comprised of the user equipment specific channel measurement resources, and each channel measurement resource set may belong to different transceiver reception points of the target cell. In other example embodiments, the user equipment specific channel measurement resources may be transmitted in a handover request acknowledgement message or a handover command message.

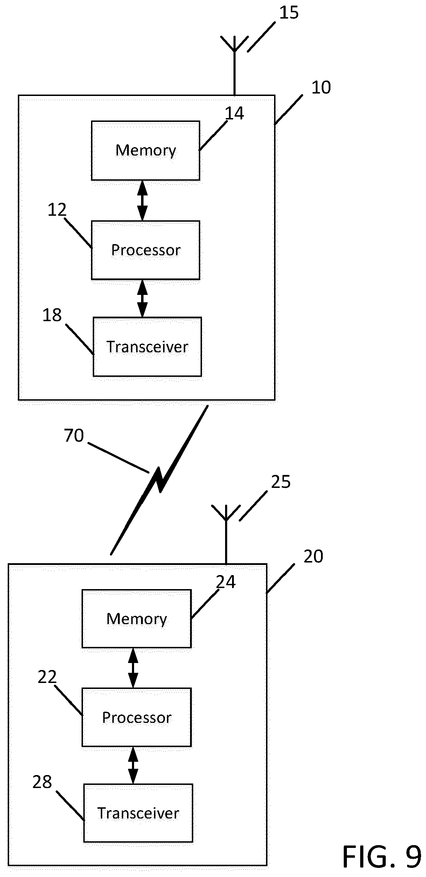

FIG. 8 illustrates an example flow diagram of another method, according to certain example embodiments. In an example embodiment, the method of FIG. 8 may be performed by a network entity, or a group of multiple network elements in a 3GPP system, such as LTE or 5G-NR. For instance, in an example embodiment, the method of FIG. 8 may be performed by a UE similar to one of apparatuses 10 or 20 illustrated in FIG 9..

According to certain example embodiments, the method of FIG. 8 may include, at 800, receiving specific channel measurement resources of a target cell, from a source cell during a handover preparation phase. According to certain example embodiments, each specific channel measurement resource may belong to different transceiver reception points. The method may also include, at 805, establishing a communication connection with a target cell based on the specific channel measurement resources. The method may further include, at 810, transmitting a report to the target cell based on the specific channel measurement resource after the handover preparation phase.

According to certain example embodiments, the specific channel measurement resources may be received from the source cell prior to handover of a user equipment to the target cell, or after completion of the handover to the target cell. According to some example embodiments, the specific channel measurement resources may be received via a radio resource control reconfiguration. According to other example embodiments, a plurality of channel measurement resource sets may be comprised of the specific channel measurement resources, and each channel measurement resource set may belong to different transceiver points of the target cell.

In certain example embodiments, the specific channel measurement resources may be generated by the target cell, and the specific channel measurement resources may be transparently received through the source cell from the target cell. In some example embodiments, the specific channel measurement resources may be received via a handover command message.

FIG. 9 illustrates a set of apparatuses 10 and 20 according to certain example embodiments. In certain example embodiments, apparatuses 10 and 20 may be elements in a communications network or associated with such a network. For example, apparatus 10 may be a UE or other similar radio communication computer device, and apparatus 20 may be a network (i.e., gNB).

In some example embodiments, apparatuses 10 and 20 may include one or more processors, one or more computer-readable storage medium (for example, memory, storage, or the like), one or more radio access components (for example, a modem, a transceiver, or the like), and/or a user interface. In some example embodiments, apparatuses 10 and 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatuses 10 and 20 may include components or features not shown in FIG. 9.

As illustrated in the example of FIG. 9, apparatuses 10 and 20 may include or be coupled to a processors 12 and 22 for processing information and executing instructions or operations. Processors 12 and 22 may be any type of general or specific purpose processor. In fact, processors 12 and 22 may include one or more of general-purpose computers, special purpose computers, microprocessors, DSPs, field-programmable gate arrays (FPGAs), application-specific integrated circuits (ASICs), and processors based on a multi-core processor architecture, as examples. While a single processors 12 and 22 is shown in FIG. 9, multiple processors may be utilized according to other example embodiments. For example, it should be understood that, in certain example embodiments, apparatuses 10 and 20 may include two or more processors that may form a multiprocessor system (e.g., in this case processors 12 may represent a multiprocessor) that may support multiprocessing. According to certain example embodiments, the multiprocessor system may be tightly coupled or loosely coupled (e.g., to form a computer cluster).

Processors 12 and 22 may perform functions associated with the operation of apparatuses 10 and 20 including, as some examples, precoding of antenna gain/phase parameters, encoding and decoding of individual bits forming a communication message, formatting of information, and overall control of the apparatuses 10 and 20, including processes and examples illustrated in FIGs. 1-8.

Apparatuses 10 and 20 may further include or be coupled to a memories 14 and 24 (internal or external), which may be respectively coupled to processors 12 and 24 for storing information and instructions that may be executed by processors 12 and 24. Memories 14 and 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memories 14 and 24 can be comprised of any combination of random access memory (RAM), read only memory (ROM), static storage such as a magnetic or optical disk, hard disk drive (HDD), or any other type of non-transitory machine or computer readable media. The instructions stored in memories 14 and 24 may include program instructions or computer program code that, when executed by processors 12 and 22, enable the apparatuses 10 and 20 to perform tasks as described herein.

In certain example embodiments, apparatuses 10 and 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 12 and 22 and/or apparatuses 10 and 20 to perform any of the methods and examples illustrated in FIGs. 1-8.

In some example embodiments, apparatuses 10 and 20 may also include or be coupled to one or more antennas 15 and 25 for receiving a downlink signal and for transmitting via an UL from apparatuses 10 and 20. Apparatuses 10 and 20 may further include a transceivers 18 and 28 configured to transmit and receive information. The transceivers 18 and 28 may also include a radio interface (e.g., a modem) coupled to the antennas 15 and 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceivers 18 and 28 may be configured to modulate information on to a carrier waveform for transmission by the antennas 15 and 25 and demodulate information received via the antenna 15 and 25 for further processing by other elements of apparatuses 10 and 20. In other example embodiments, transceivers 18 and 28 may be capable of transmitting and receiving signals or data directly. Additionally or alternatively, in some example embodiments, apparatus 10 may include an input and/or output device (I/O device). In certain example embodiments, apparatuses 10 and 20 may further include a user interface, such as a graphical user interface or touchscreen.

In certain example embodiments, memories 14 and 34 store software modules that provide functionality when executed by processors 12 and 22. The modules may include, for example, an operating system that provides operating system functionality for apparatuses 10 and 20. The memory may also store one or more functional modules, such as an application or program, to provide additional functionality for apparatuses 10 and 20. The components of apparatuses 10 and 20 may be implemented in hardware, or as any suitable combination of hardware and software. According to certain example embodiments, apparatuses 10 and 20 may optionally be configured to communicate each other (in any combination) via a wireless or wired communication links 70 according to any radio access technology, such as NR.

According to certain example embodiments, processors 12 and 22 and memories 14 and 24 may be included in or may form a part of processing circuitry or control circuitry. In addition, in some example embodiments, transceivers 18 and 28 may be included in or may form a part of transceiving circuitry.

For instance, in certain example embodiments, apparatus 10 may be controlled by memory 14 and processor 12 to transmit a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. Apparatus 10 may also be controlled by memory 14 and processor 12 to receive, from the target cell during the handover preparation phase to the target cell, an acknowledgment comprising a user equipment specific channel measurement resources. Apparatus 10 may further be controlled by memory 14 and processor 12 to transmit the user equipment specific channel measurement resources to the user equipment.

In other example embodiments, apparatus 10 may be controlled by memory 14 and processor 12 to receive a handover request including user equipment capability information from a source cell during a handover preparation phase of a user equipment to the apparatus. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. Apparatus 10 may also be controlled by memory 14 and processor 12 to transmit, to the source cell during the handover preparation phase to the apparatus, an acknowledgment including user equipment specific channel measurement resources. Apparatus 10 may further be controlled by memory 14 and processor 12 to receive a report from the user equipment based on the user equipment specific channel measurement resource transmitted after the handover preparation phase to the apparatus.

In other example embodiments, apparatus 20 may be controlled by memory 24 and processor 22 to receive specific channel measurement resources of a target cell, from a source cell during a handover preparation phase. According to certain example embodiments, each specific channel measurement resource belongs to different transceiver reception points. Apparatus 20 may further be controlled by memory 24 and processor 22 to establish a communication connection with a target cell based on the specific channel measurement resources. Apparatus 20 may also be controlled by memory 24 and processor 22 to transmit a report to the target cell based on the specific channel measurement resource after the handover preparation phase.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for transmitting a handover request including user equipment capability information to a target cell during a handover preparation phase of a user equipment to the target cell. According to certain example embodiments, the user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include means for receiving, from the target cell during the handover preparation phase to the target cell, an acknowledgment including a user equipment specific channel measurement resources. The apparatus may further include means for transmitting the user equipment specific channel measurement resources to the user equipment.

Other example embodiments may be directed to an apparatus that includes means for performing any of the methods described herein including, for example, means for receiving a handover request including user equipment capability information from a source cell during a handover preparation phase of a user equipment to the apparatus. The user equipment capability information may include at least one of user equipment multi-transmission or user equipment multi-reception capabilities, single-downlink control information capabilities or multi-downlink control information capabilities, group based beam reporting capability or beam sweeping factors. The apparatus may also include means for transmitting, to the source cell during the handover preparation phase to the apparatus, an acknowledgment including user equipment specific channel measurement resources. The apparatus may further include means for receiving a report from the user equipment based on the user equipment specific channel measurement resource transmitted after the handover preparation phase to the apparatus.

Other example embodiments may be directed to an apparatus that includes means for performing any of the methods described herein including, for example, means for receiving specific channel measurement resources of a target cell, from a source cell during a handover preparation phase. According to certain example embodiments, each specific channel measurement resource may belong to different transceiver reception points. The apparatus may also include means for establishing a communication connection with a target cell based on the specific channel measurement resources. The apparatus may further include means for transmitting a report to the target cell based on the specific channel measurement resource after the handover preparation phase.

Certain example embodiments described herein provide several technical improvements, enhancements, and /or advantages. For instance, in some example embodiments, it may be possible to provide an efficient utilization of the UE capabilities in regard to the functionalities being offered by the cell. This efficient utilization may enable the UE and network to start scheduling from different TRPs in a simultaneous manner immediately after handover to a target cell. In other example embodiments, it may be possible to enable early group-based beam measurements and reports and reporting for a m-Rx/Tx capable UE after a handover procedure, which in turn may minimize the time the UE spends in single-Rx operation due to the handover.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- BS: Base Station
- CMR: Channel Measurements Resource
- DL: Downlink
- eNB: Enhanced Node B
- Enum: Enumeration
- E-UTRAN: Evolved UTRAN
- gNB: 5G or Next Generation NodeB
- LTE: Long Term Evolution
- M-DCI: Multi Downlink Control Information
- MRx: Multi Reception
- MTx: Multi Transmission
- NR: New Radio
- NW: Network
- RMSI: Remaining System Information
- S-DCI: Single Downlink Control Information
- SIB: System Information Block
- SS/PBCH: Synchronization Signal/Physical Broadcast Channel
- SSB: Synchronization Signal Block
- TRP: Transceiver Point
- UE: User Equipment
- UL: Uplink

## Claims

1. An apparatus, comprising:
means for receiving specific channel measurement resources of a target cell, from a source cell during a handover preparation phase, wherein each specific channel measurement resource belongs to different transceiver reception points;
means for establishing a communication connection with a target cell based on the specific channel measurement resources; and
means for transmitting a report to the target cell based on the specific channel measurement resource after the handover preparation phase.

2. The apparatus according to claim 1, wherein the specific channel measurement resources are received from the source cell prior to handover of a user equipment to the target cell, or after completion of the handover to the target cell.

3. The apparatus according to claims 1 or 2, wherein the specific channel measurement resources are received via a radio resource control reconfiguration.

4. The apparatus according to any of claims 1-3,
wherein a plurality of channel measurement resource sets are comprised of the specific channel measurement resources, and
wherein each channel measurement resource set belongs to different transceiver points of the target cell.

5. The apparatus according to any of claims 1-4,
wherein the specific channel measurement resources are generated by the target cell, and
wherein the specific channel measurement resources are transparently received through the source cell from the target cell.

6. The apparatus according to any of claims 1-5, wherein the specific channel measurement resources are received via a handover command message.

7. An apparatus, comprising:
means for transmitting a handover request comprising user equipment capability information to a target cell during a handover preparation phase of a user equipment to the target cell, wherein the user equipment capability information comprises at least one of the following: user equipment multi-transmission or user equipment multi-reception capabilities, single-downlink control information capabilities or multi-downlink control information capabilities, group based beam reporting capability or beam sweeping factors;
means for receiving, from the target cell during the handover preparation phase to the target cell, an acknowledgment comprising a user equipment specific channel measurement resources; and
means for transmitting the user equipment specific channel measurement resources to the user equipment.

8. The apparatus according to claim 7, wherein the user equipment specific channel measurement resources comprise channel state information resources where each resource belongs to different transceiver reception points.

9. The apparatus according to claims 7 or 8, wherein the user equipment specific channel measurement resources are received from the target cell prior to handover of the user equipment to the target cell, or after completion of the handover to the target cell.

10. The apparatus according to any of claims 7-9, wherein the acknowledgment further comprises target cell single-downlink control information capabilities or target cell multi-downlink control information capabilities.

11. The apparatus according to any of claims 7-10, wherein the user equipment specific channel measurement resources are transmitted to the user equipment via a radio resource control reconfiguration.

12. The apparatus according to any of claims 7-11,
wherein a plurality of channel measurement resource sets are comprised of the user equipment specific channel measurement resources, and
wherein each channel measurement resource set belongs to different transceiver reception points of the target cell.

13. The apparatus according to any of claims 7-12, wherein the user equipment specific channel measurement resources are received in a handover request acknowledgement message or a handover command message.

14. An apparatus, comprising:
means for receiving a handover request comprising user equipment capability information from a source cell during a handover preparation phase of a user equipment to the apparatus, wherein the user equipment capability information comprises at least one of the following: user equipment multi-transmission or user equipment multi-reception capabilities, single-downlink control information capabilities or multi-downlink control information capabilities, group based beam reporting capability or beam sweeping factors; and
means for transmitting, to the source cell during the handover preparation phase to the apparatus, an acknowledgment comprising user equipment specific channel measurement resources; and
means for receiving, from the user equipment after the handover preparation phase to the apparatus, a report based on the user equipment specific channel measurement resource.

15. The apparatus according to claim 14, wherein the user equipment specific channel measurement resources comprise channel state information resources where each resource belongs to different transceiver reception points.
